# EUROPEAN PATENT APPLICATION

(11) **EP 4 071 987 A1**
(43) Date of publication of application: **12.10.2022**
(21) Application number: 21741336.8
(22) Date of filing: 13.01.2021
(51) Int. Cl.: H02K 49/10, F16H 49/00, H02K 7/10

(54) **MAGNETIC FIELD GENERATION DEVICE AND MAGNETIC GEAR**

(30) Priority: 16.01.2020 JP 2020005414
(71) Applicant: Mitsubishi Heavy Industries, Ltd., Tokyo 100-8332 (JP)
(72) Inventor: SASAKI, Mikito, Tokyo 100-8332 (JP); MATSUSHITA, Takatoshi, Tokyo 100-8332 (JP); UMEDA, Akihiko, Tokyo 100-8332 (JP)
(74) Representative: Studio Torta S.p.A.
(86) International application number: PCT/JP2021/000789
(87) International publication number: WO 2021/145334

(57) **Abstract**

A magnetic field generator includes a plurality of magnets on support members disposed opposite to each other across a gap. The plurality of magnets include: first magnets having a magnetization direction orthogonal to a support surface of each of the support members; and second magnets having a magnetization direction parallel to the support surface, and form a Halbach magnet array. Either of the first magnets or the second magnets has a first dimension orthogonal to the support surface which is smaller than a first dimension of the other of the first magnets or the second magnets, either of the first magnets or the second magnets being formed into a recessed shape as viewed from a side of the gap.

## Description

### TECHNICAL FIELD

The present disclosure relates to a magnetic field generator and a magnetic gear including the magnetic field generator.

### BACKGROUND

As one type of gear device, there is a magnetic gear which utilizes an attractive force and a repulsive force of a magnet to transmit torque or motion in a non-contact manner, thereby being able to avoid a problem such as wear, vibration, or noise caused by tooth contact. A flux-modulated type (harmonic type) magnetic gear of the magnetic gear includes an inner circumferential side magnet field and an outer circumferential side magnet field concentrically (coaxially) disposed, and a magnetic pole piece device which has a plurality of magnetic pole pieces (pole pieces) and a plurality of non-magnetic materials each being disposed with a gap (air gap) between these two magnet fields and alternately arranged in the circumferential direction. Then, magnetic fluxes of magnets of the above-described two magnet fields are modulated by the above-described respective magnetic pole pieces to generate harmonic magnetic fluxes, and the above-described two magnet fields are synchronized with the harmonic magnetic fluxes, respectively, thereby operating the flux-modulated type magnetic gear.

In such magnetic gear, in order to increase the torque density, it is effective to reduce a leakage magnetic flux by adopting a Halbach magnet array for these two magnet fields. The Halbach magnet array is formed by alternately disposing first magnets (radial magnetization magnets), which have a magnetization direction orthogonal to a support surface of each of support members disposed opposite to each other across the gap, and second magnets (circumferential magnetization magnets), which have a magnetization direction parallel to the support surface, on the support surface along the support surface.

In the Halbach magnet array, since the magnets having the different magnetization directions are disposed adjacent to each other, an operating point is lowered by an external demagnetizing field. Further, thermal demagnetization may occur in which a coercive force of a magnet decreases due to an influence of heat generation by a coil or an increase in atmospheric temperature. Such thermal demagnetization increases the demagnetization rate and further lowers the operating point lowered by the external demagnetizing field. To cope therewith, Patent Document 1 proposes, while focusing on the fact that the magnetization magnets (circumferential magnetization magnets) having the magnetization direction parallel to the support surface are easily affected by thermal demagnetization, improving the coercive force (thermal demagnetization property) by adding either Dy (dysprosium) or Tb (terbium), which is rare earth, in the vicinity of the gap of the magnetization magnets.

### Citation List

### Patent Literature

Patent Document 1: JP5370912B

### SUMMARY

### Technical Problem

Patent Document 1 described above suppresses the demagnetization rate by adding Dy (dysprosium), Tb (terbium), which is rare earth, in the vicinity of the gap of the circumferential magnetization magnets which are easily subjected to thermal demagnetization. However, such heavy rare earth is an expensive material, increasing a production cost.

At least one embodiment of the present disclosure has been made in view of the above, and the object of the at least one embodiment of the present disclosure is to provide, at low cost, the magnetic field generator capable of increasing the magnetic field by suppressing the demagnetization rate and the magnetic gear including the magnetic field generator.

### Solution to Problem

In order to solve the above-described problems, a magnetic field generator according to at least one embodiment of the present disclosure is a magnetic field generator including a plurality of magnets on support members disposed opposite to each other across a gap. The plurality of magnets include: first magnets having a magnetization direction orthogonal to a support surface of each of the support members; and second magnets having a magnetization direction parallel to the support surface. The first magnets and the second magnets form a Halbach magnet array where the first magnets and the second magnets are alternately disposed along the support surface. Either of the first magnets or the second magnets has a first dimension orthogonal to the support surface which is smaller than a first dimension of the other of the first magnets or the second magnets, either of the first magnets or the second magnets being formed into a recessed shape as viewed from a side of the gap.

In order to solve the above-described problems, a magnetic field generator according to at least one embodiment of the present disclosure is a magnetic field generator including a plurality of magnets on support members disposed opposite to each other across a gap. The plurality of magnets include: first magnets having a magnetization direction orthogonal to a support surface of each of the support members; and second magnets having a magnetization direction parallel to the support surface. The first magnets and the second magnets form a Halbach magnet array where the first magnets and the second magnets are alternately disposed along the support surface. The second magnets have a second dimension parallel to the support surface which is larger than a second dimension of the first magnets.

### Advantageous Effects

According to at least one embodiment of the present disclosure, it is possible to provide, at low cost, a magnetic field generator capable of increasing a magnetic field by suppressing the demagnetization rate and a magnetic gear including the magnetic field generator.

### BRIEF DESCRIPTION OF DRAWINGS

FIG. 1 is a schematic view showing a cross section of a magnetic gear along the radial direction according to an embodiment of the present invention.
FIG. 2 is an enlarged cross-sectional view schematically showing a part of a cross section of the magnetic gear shown in FIG. 1.
FIG. 3 is a schematic view showing the cross section of the magnetic gear along the axial direction according to an embodiment of the present invention.
FIG. 4 is a schematic view showing a magnetization direction of each magnet of a magnetic field generator of an outer diameter side magnet field in FIG. 2.
FIG. 5 is a comparative example of FIG. 4.
FIG. 6 is a verification result of the relationship between the demagnetization rate and the dimensional ratio of a first dimension of a second magnet to a first dimension of a first magnet in FIG. 4.
FIG. 7 is a first modified example of FIG. 4.
FIG. 8 is a second modified example of FIG. 4.
FIG. 9 is a third modified example of FIG. 4.
FIG. 10 is a verification result of the relationship between the maximum transmission torque of the magnetic gear and the dimensional ratio of a second dimension of the second magnet to a second dimension of the first magnet in FIG. 9.
FIG. 11 is a fourth modified example of FIG. 4.

### DETAILED DESCRIPTION

Some embodiments of the present invention will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

### (Configuration of magnetic gear 9)

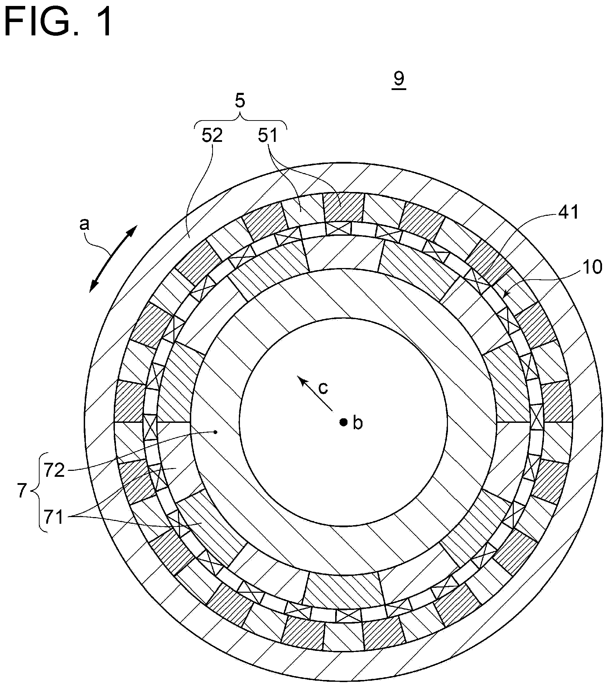

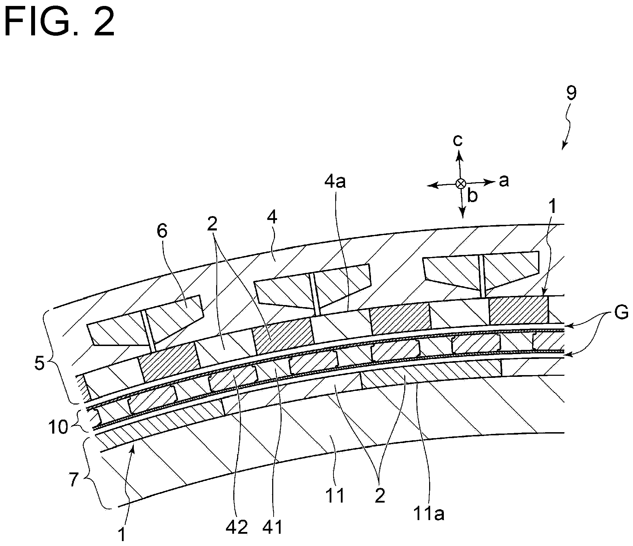

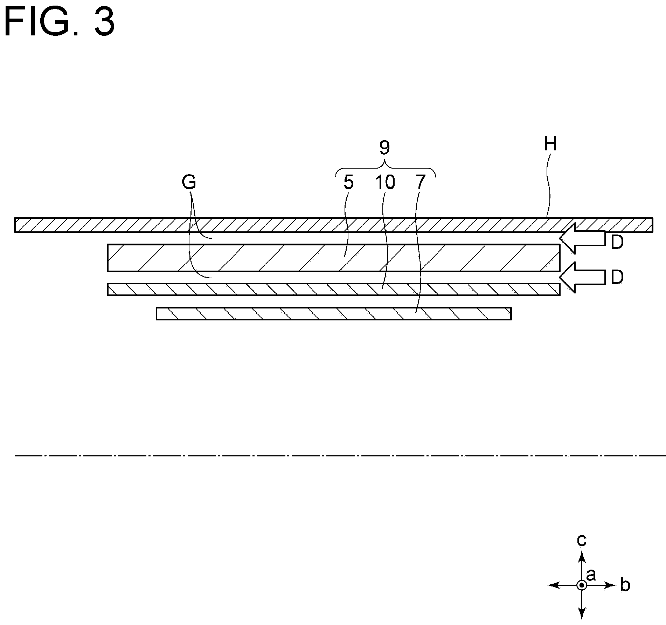

FIG. 1 is a schematic view showing a cross section of a magnetic gear 9 along a radial direction c according to an embodiment of the present invention. FIG. 2 is an enlarged cross-sectional view schematically showing a part of the cross section of the magnetic gear 9 shown in FIG. 1. FIG. 3 is a schematic view showing the cross section of the magnetic gear 9 along an axial direction b according to an embodiment of the present invention.

The magnetic gear 9 is a device having a mechanism for transmitting torque in a non-contact manner by utilizing an attractive force and a repulsive force of a magnet. The magnetic gear 9 shown in FIGs. 1 to 3 is of a flux-modulated type (harmonic type), and as illustrated, has a structure where an outer diameter side magnet field 5 (outer rotor) having a cylindrical shape (annular; the same applies hereinafter) as a whole, an inner diameter side magnet field 7 (inner rotor) having a cylindrical or columnar shape as a whole, and a magnetic pole piece device 10 (center rotor) having a cylindrical shape as a whole are coaxially disposed with gaps G (air gaps) of a certain distance in the radial direction c (radial direction) from each other. That is, the outer diameter side magnet field 5 is disposed on the radially outer side (outer diameter side) relative to the inner diameter side magnet field 7. Further, the magnetic pole piece device 10 is disposed between the outer diameter side magnet field 5 and the inner diameter side magnet field 7. Then, the outer diameter side magnet field 5, the inner diameter side magnet field 7, and the magnetic pole piece device 10 are disposed concentrically.

Further, as shown in FIG. 2, the outer diameter side magnet field 5 and the inner diameter side magnet field 7 described above each include a magnetic field generator 1 with a plurality of magnets 2 disposed along a circumferential direction a in a cross section of the magnetic gear 9 cut along the radial direction c (to be referred to as a radial cross section, hereinafter). Although the detailed structure of the magnetic field generator 1 will be described later, the magnets 2 constituting the magnetic field generator 1 are, respectively, disposed on support surfaces 4a, 11a of support members 4, 11 which are disposed opposite to each other across the predetermined gaps G (air gaps), and form a Halbach magnet array. The outer diameter side magnet field 5 and the inner diameter side magnet field 7 each include such magnetic field generator 1, thereby forming a magnetic circuit.

The magnetic pole piece device 10 includes a plurality of magnetic pole pieces 41 (pole pieces) disposed at intervals (regular intervals) from each other over the whole circumference in the circumferential direction a. Then, for example, if the inner diameter side magnet field 7 is rotated, the magnetic flux of the inner diameter side magnet field 7 is modulated by the magnetic pole pieces 41 of the magnetic pole piece device 10, and rotational torque is generated in the magnetic pole piece device 10 by the action of the modulated magnetic field and the outer diameter side magnet field 5. Non-magnetic materials 42 are alternately disposed between the adjacent magnetic pole pieces 41.

In the embodiments shown in FIGs. 1 to 3, a magnetic geared motor integrated with a motor is shown as an example of the magnetic gear 9 (flux-modulated type magnetic gear). More specifically, in the magnetic geared motor, the outer diameter side magnet field 5 is a stator where a plurality of coils 6 (see FIG. 2) are installed, and by rotating the inner diameter side magnet field 7 (high-speed rotor) with the electromotive force of the coils 6, the magnetic pole piece device 10 (low-speed rotor) rotates according to the reduction ratio which is determined by the ratio of the number of pole pairs of the magnet 2 of the outer diameter side magnet field 5 to the number of pole pairs of the magnet 2 of the inner diameter side magnet field 7.

Further, the magnetic geared motor is supplied with a cooling medium D, such as air or water, in order to protect the above-described constituent elements from heat generated during operation. More specifically, as shown in FIG. 3, the cylindrical gaps G are formed between the inner diameter side magnet field 7 and the magnetic pole piece device 10 and between the outer diameter side magnet field 5 and the magnetic pole piece device 10, respectively, and the cooling medium D is supplied to each of these cylindrical gaps G so as to flow from one end side toward another end side. Further, the cooling medium D is similarly supplied to a gap formed between the outer diameter side magnet field 5 and a housing H located on the outer peripheral side thereof.

A gas such as air may be supplied to the gap between the outer diameter side magnet field 5 and the housing H described above, and for example, a water cooling tube may be installed to flow cooling water or the like through the water cooling tube.

### (Configuration of magnetic field generator 1)

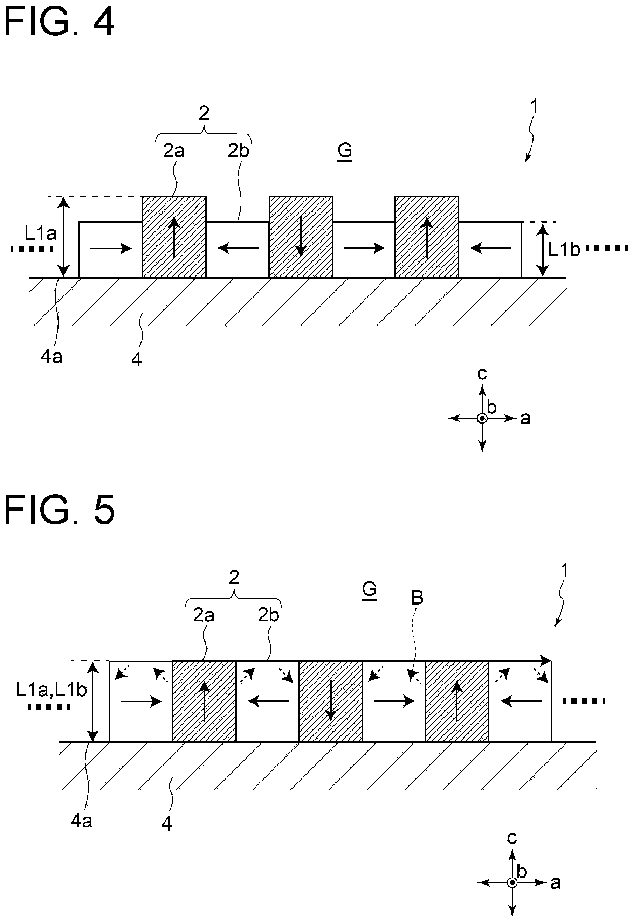

Hereinafter, the magnetic field generator 1 will be described in detail. FIG. 4 is a schematic view showing a magnetization direction of each magnet 2 of the magnetic field generator 1 of the outer diameter side magnet field 5 in FIG. 2. In FIG. 4, it is considered that the size of the magnetic gear 9 along the radial direction c is sufficiently large and the support surface 4a of the support member 4 where each magnet 2 is disposed is planar (linear on the cross-sectional view). Further, in the following description, the magnetic field generator 1 of the outer diameter side magnet field 5 will be described, but the same also applies to the magnetic field generator 1 of the inner diameter side magnet field 7 unless particularly stated otherwise.

The magnetic field generator 1 includes first magnets 2a having a magnetization direction orthogonal to the support surface 4a, and second magnets 2b having a magnetization direction parallel to the support surface 4a. The first magnets 2a and the second magnets 2b are alternately disposed along the circumferential direction a, and form a Halbach magnet array. The first magnets 2a each have a substantially rectangular cross section with a first dimension L1a orthogonal to the support surface 4a (along the radial direction c) and a second dimension L2a parallel to the support surface 4a (along the circumferential direction a). The second magnets 2b each have a substantially rectangular cross section with a first dimension L1b orthogonal to the support surface 4a (along the radial direction c) and a second dimension L2b parallel to the support surface 4a (along the circumferential direction a).

FIG. 5 is a comparative example of FIG. 4. The comparative example differs from FIG. 4 in that the first magnet 2a and the second magnet 2b have the cross-sectional shapes with the same dimension. That is, in the comparative example, the first dimension L1a and the second dimension L2a of the first magnet 2a are equal to the first dimension L1b and the second dimension L2b of the second magnet 2b. In such Halbach magnet array, since the magnets having the different magnetization directions are disposed adjacent to each other, an operating point is lowered by an external demagnetizing field B. Further, thermal demagnetization may occur in which a coercive force of the magnets 2 decreases due to an influence of heat generation by the coil 6 (see FIG. 2) or an increase in atmospheric temperature. Such thermal demagnetization becomes a factor increasing the demagnetization rate and further lowering the operating point lowered by the external demagnetizing field B.

In order to solve such problem, one of the first magnet 2a or the second magnet 2b has the first dimension orthogonal to the support surface 4a which is smaller than the first dimension of the other of the first magnet 2a or the second magnet 2b, and is formed into a recessed shape as viewed from the gap G side. In the embodiment shown in FIG. 4, the first dimension L1b of the second magnet 2b is designed to be smaller than the first dimension L1a of the first magnet 2a, and the second magnet 2b is disposed to be recessed with respect to the first magnet 2a (in other words, the first magnet 2a is disposed to be projected with respect to the second magnet 2b) as viewed from the gap G side. Thus, the magnet portion having the low operating point can be reduced as compared with the comparative example of FIG. 5.

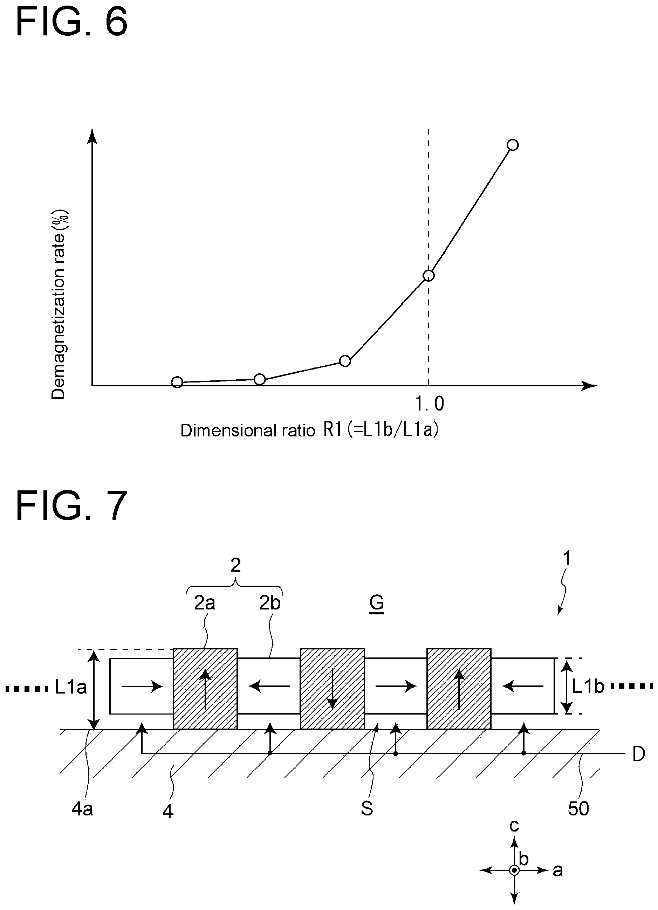

FIG. 6 is a verification result of the relationship between the demagnetization rate and a dimensional ratio R1 (=L1b/L1a) of the first dimension L1b of the second magnet 2b to the first dimension L1a of the first magnet 2a in FIG. 4. The verification result shows that the demagnetization rate increases and the external demagnetizing field B increases, if the dimensional ratio R1 increases (as the first dimension L1b of the second magnet 2b becomes larger than the first dimension L1a of the first magnet 2a). On the other hand, the verification result shows that the demagnetization rate decreases and the external demagnetizing field B decreases if the dimensional ratio R1 decreases (as the first dimension L1b of the second magnet 2b becomes smaller than the first dimension L1a of the first magnet 2a). Thus, since the first dimension L1b of the second magnet 2b is designed to be smaller than the first dimension L1a of the first magnet 2a as described above, it is possible to suppress the external demagnetizing field B and to implement the magnetic field generator 1 having a high magnetic force.

Further, since the second magnet 2b is disposed to be recessed with respect to the first magnet 2a as viewed from the gap G, it is possible to increase the contact area of the magnet 2 with respect to the cooling medium D (see FIG. 3) flowing through the gaps G. Thus, the thermal demagnetization is also suppressed in which the coercive force of the magnet 2 decreases due to the influence of heat generation by the coil 6 (see FIG. 2) or the increase in atmospheric temperature, making it possible to decrease the demagnetization rate more effectively.

Further, the first magnet 2a and the second magnet 2b are disposed so as to contact the support surface 4a. Thus, it is possible to fix both the first magnet 2a and the second magnet 2b on the support surface 4a with good strength, and it is possible to obtain excellent structural stability and rigidity.

FIG. 7 is a first modified example of FIG. 4. In the first modified example, the first magnet 2a is disposed such that a surface opposite to the gap G is in contact with the support surface 4a, whereas the second magnet 2b is disposed such that the surface opposite to the gap G is separated from the support surface 4a. Since the second magnet 2b is thus disposed at the position separated from the gap G, a space S is formed between the second magnet 2b and the support surface 4a, and the contact area with the surroundings increases. As a result, cooling performance is improved, and it is possible to more effectively suppress the thermal demagnetization in which the coercive force of the magnet 2 decreases due to the influence of heat generation by the coil 6 or the increase in atmospheric temperature. In this case, the second magnet 2b can send cooling seal from both the gap G on the radially outer side and the space S on the radially inner side, and a heat transfer area between the second magnet 2b, and the gap G and the space S is large, making it possible to obtain excellent cooling performance.

As shown in FIG. 7, the magnetic field generator 1 of the first modified example may include a cooling medium supply part 50 for supplying the cooling medium D to the space S. The cooling medium supply part 50 is configured to supply the cooling medium D to each space S. In FIG. 7, the cooling medium supply part 50 includes a flow path capable of supplying the cooling medium D in parallel to each space S, but may include a flow path capable of supplying the cooling medium D in series. Further, on the flow path, a valve for changing flow paths or the supply amount of the cooling medium D may be disposed. Further, the cooling medium D is, for example, the cooling medium D supplied to the gap G as described above with reference to FIG. 3 and is, for example, air or water, but may be another cooling medium which is independent of the cooling medium D flowing through the gap G. In the first modified example, with such cooling medium supply part 50, it is possible to further improve the cooling performance in the space S. Thus, the thermal demagnetization is suppressed in which the coercive force of the magnet decreases due to the influence of heat generation by the coil 6 or the increase in atmospheric temperature, and it is possible to decrease the demagnetization rate more effectively.

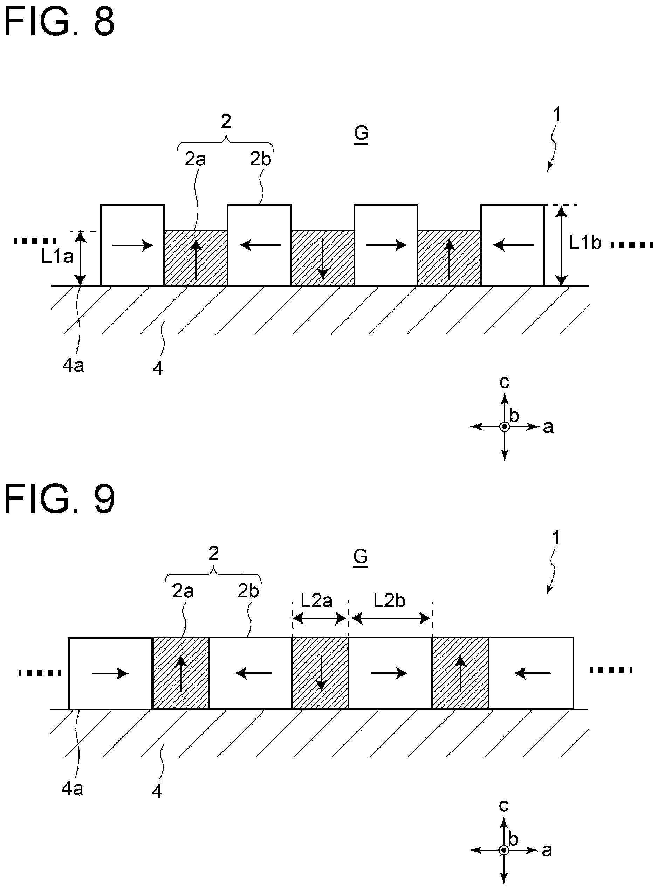

FIG. 8 is a second modified example of FIG. 4. In the second modified example, contrary to the embodiment shown in FIG. 4, the first dimension L1a of the first magnet 2a is designed to be smaller than the first dimension L1b of the second magnet 2b, and the first magnet 2a is disposed to be recessed with respect to the second magnet 2b (in other words, the second magnet 2b is disposed to be projected with respect to the first magnet 2a) as viewed from the gap G side. In this case, although a portion having a strong external demagnetizing field remains, the operating point can be raised by the increase in volume of the second magnet 2b.

FIG. 9 is a third modified example of FIG. 4. In the third modified example, the second dimension L2b of the second magnet 2b is designed to be larger than the second dimension L2a of the first magnet 2a (the first dimension L1b of the second magnet 2b is equal to the first dimension L1a of the first magnet 2a as in the comparative example of FIG. 5).

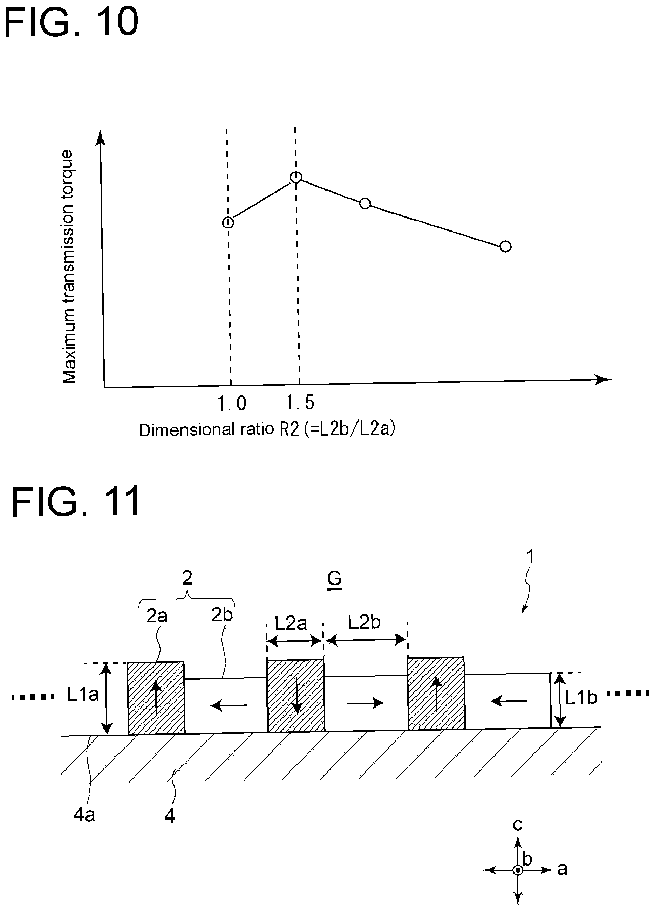

FIG. 10 is a verification result of the relationship between the maximum transmission torque of the magnetic gear 9 and a dimensional ratio R2 (=L2b/L2a) of the second dimension L2b of the second magnet 2b to the second dimension L2a of the first magnet 2a in FIG. 9. The verification result confirms that the maximum transmission torque of the magnetic gear 9 tends to increase, show a peak, and then decrease, if the dimensional ratio R2 increases (as the second dimension L2b of the second magnet 2b becomes larger than the second dimension L2a of the first magnet 2a). Then, the verification result confirms that the maximum transmission torque shows a maximum value when the dimensional ratio R2 is about 1.5. Thus, by designing the second dimension L2a of the first magnet 2a and the second dimension L2b of the second magnet 2b such that the dimensional ratio R2 is about 1.5, the operating point of the magnet is improved by increasing the dimension L2b of the second magnet 2b, and the maximum transmission torque can be increased more effectively by increasing the magnetic flux density.

FIG. 11 is a fourth modified example of FIG. 4. In the fourth modified example, the first dimension L1b of the second magnet 2b is designed to be smaller than the first dimension L1a of the first magnet 2a, and the second dimension L2b of the second magnet 2b is designed to be larger than the second dimension L2a of the first magnet 2a. That is, regarding the first dimension L1, the second magnet 2b is designed to be smaller than the first magnet 2a as in the embodiments shown in FIGs. 4, 7, and 8, and regarding the second dimension L2, the second magnet 2b is designed to be larger than the first magnet 2a (preferably, the dimensional ratio R1 is about 1.5) as in the embodiment shown in FIG. 9. Thus, as compared with the comparative example of FIG. 5, it is possible to reduce the external demagnetizing field B more effectively and to increase the maximum transmission torque.

As described above, according to each of the above-described embodiments, it is possible to provide, at low cost, the magnetic field generator 1 capable of increasing the magnetic field by suppressing the demagnetization rate and the magnetic gear 9 including the magnetic field generator 1.

As for the rest, without departing from the spirit of the present disclosure, it is possible to replace the constituent elements in the above-described embodiments with known constituent elements, respectively, as needed and further, the above-described embodiments may be combined as needed.

The contents described in the above embodiments would be understood as follows, for instance.
(1) A magnetic field generator according to one aspect is a magnetic field generator (such as the magnetic field generator 1 of the above-described embodiment) including a plurality of magnets (such as the magnets 2 of the above-described embodiment) on support members (such as the support members 4, 11 of the above-described embodiment) disposed opposite to each other across a gap (such as the gap G of the above-described embodiment). The plurality of magnets include: first magnets (such as the first magnets 2a of the above-described embodiment) having a magnetization direction orthogonal to a support surface of each of the support members; and second magnets (such as the second magnets 2b of the above-described embodiment) having a magnetization direction parallel to the support surface. The first magnets and the second magnets form a Halbach magnet array where the first magnets and the second magnets are alternately disposed along the support surface. Either of the first magnets or the second magnets has a first dimension orthogonal to the support surface which is smaller than a first dimension of the other of the first magnets or the second magnets, either of the first magnets or the second magnets being formed into a recessed shape as viewed from a side of the gap.
   With the above aspect (1), the first magnets and the second magnets forming the Halbach magnet array are provided. Either of the first magnets or the second magnets is formed such that the first dimension orthogonal to the support surface is smaller than the first dimension of the other. Thus, it is possible to suppress the external demagnetizing field. Further, since the first magnets and the second magnets are different in first dimension, the recess and the projection are formed on the surface over the plurality of magnets as viewed from the gap side. Consequently, the contact area with the gap is increased and cooling performance of the plurality of magnets is improved, making it possible to suppress the thermal demagnetization in which the coercive force of the magnets decreases due to the influence of heat generation by the coil or the increase in atmospheric temperature. As a result, it is possible to decrease the demagnetization rate in the Halbach magnet array and it is possible to implement the magnetic field generator having a high magnetic field, without using a particularly expensive material.
(2) A magnetic field generator according to one aspect is a magnetic field generator (such as the magnetic field generator 1 of the above-described embodiment) including a plurality of magnets (such as the magnets 2 of the above-described embodiment) on support members (such as the support members 4, 11 of the above-described embodiment) disposed opposite to each other across a gap (such as the gap G of the above-described embodiment). The plurality of magnets include: first magnets (such as the first magnets 2a of the above-described embodiment) having a magnetization direction orthogonal to a support surface of each of the support members; and second magnets (such as the second magnets 2b of the above-described embodiment) having a magnetization direction parallel to the support surface. The first magnets and the second magnets form a Halbach magnet array where the first magnets and the second magnets are alternately disposed along the support surface. The second magnets have a second dimension parallel to the support surface which is larger than a second dimension of the first magnets.
   With the above aspect (2), the first magnets and the second magnets forming the Halbach magnet array are provided. The second magnets are formed such that the first dimension in a parallel direction of a yoke opposite surface is larger than that of the first magnets. By thus increasing the volume of the second magnets, it is possible to effectively improve the maximum transmission torque in the magnetic gear when the magnetic field generator is applied to the magnetic gear.
(3) In another aspect, in the above aspect (1) or (2), the second magnets are formed such that the first dimension orthogonal to the support surface is smaller than the first dimension of the first magnets.
   With the above aspect (3), since the first dimension of the second magnets is formed to be smaller than the first dimension of the first magnets, it is possible to decrease the demagnetization rate in the Halbach magnet array and it is possible to implement the magnetic field generator having the high magnetic field, without using the particularly expensive material.
(4) In another aspect, in the above aspect (1) or (2), the first magnets are formed such that the first dimension orthogonal to the support surface is smaller than the first dimension of the second magnets.
   With the above aspect (4), since the first dimension of the first magnets is formed to be smaller than the first dimension of the second magnets, it is possible to decrease the demagnetization rate in the Halbach magnet array and it is possible to implement the magnetic field generator having the high magnetic field, while improving the cooling performance by increasing the contact area with the gap, without using the particularly expensive material.
(5) In another aspect, in the above aspect (2), a dimensional ratio (such as the dimensional ratio R2 of the above-described embodiment) of the second dimension of the second magnets to the second dimension of the first magnets is 1.5.
   With the above aspect (5), by setting the dimensional ratio in the parallel direction of the yoke opposite surface to the above-described numerical value, it is possible to improve the maximum transmission torque in the magnetic gear more effectively when the magnetic field generator is applied to the magnetic gear.
(6) In another aspect, in any one of the above aspects (1) to (5), the first magnets and the second magnets are disposed so as to contact the support surface.
   With the above aspect (6), both the first magnets and the second magnets are disposed so as to contact the support surface. Thus, it is possible to fix the first magnets and the second magnets on the support surface with good strength, and it is possible to obtain excellent structural stability and rigidity.
(7) In another aspect, in any one of the above aspects (1) to (5), either of the first magnets or the second magnets is disposed so as to contact the support surface, and the other of the first magnets or the second magnets is disposed so as to be separated from the support surface.
   With the above aspect (7), either of the first magnets or the second magnets is disposed so as to contact the support surface, whereas the other of the first magnets or the second magnets is disposed so as to be separated from the support surface. Thus, the space is formed between the support surface and the magnets disposed separately from the support surface, and the contact area with the exterior of the magnets increases. As a result, cooling performance of the magnets is improved, and it is possible to more effectively suppress the thermal demagnetization in which the coercive force of the magnets decreases due to the influence of heat generation by the coil or the increase in atmospheric temperature.
(8) In another aspect, in the above aspect (7), a cooling medium (such as the cooling medium D of the above-described embodiment) is supplied between the support surface and the other of the first magnets or the second magnets.
   With the above aspect (8), the cooling medium, such as air or water, is supplied to the space formed between the magnets and the support surface. Thus, cooling performance of the magnets is further improved, and it is possible to more effectively suppress the thermal demagnetization in which the coercive force of the magnets decreases due to the influence of heat generation by the coil or the increase in atmospheric temperature.
(9) A magnetic gear according to one aspect includes the magnetic field generator (such as the magnetic field generator 1 of the above-described embodiment) according to any one of the above aspects (1) to (8).
   With the above aspect (9), including the magnetic field generator of each of the above aspects, it is possible to implement the magnetic gear having the larger maximum transmission torque by using the stronger magnetic field, while suppressing the cost.

### Reference Signs List

- 1: Magnetic field generator
- 2: Magnet
- 2a: First magnet
- 2b: Second magnet
- 4: Support member
- 4a: Support surface
- 5: Outer diameter side magnet field
- 6: Coil
- 7: Inner diameter side magnet field
- 9: Magnetic gear
- 10: Magnetic pole piece device
- 41: Magnetic pole piece
- 42: Non-magnetic material
- 50: Cooling medium supply part
- B: External demagnetizing field
- D: Cooling medium
- G: Gap
- H: Housing

## Claims

1. A magnetic field generator comprising a plurality of magnets on support members disposed opposite to each other across a gap,
wherein the plurality of magnets include:
first magnets having a magnetization direction orthogonal to a support surface of each of the support members; and
second magnets having a magnetization direction parallel to the support surface,
wherein the first magnets and the second magnets form a Halbach magnet array where the first magnets and the second magnets are alternately disposed along the support surface, and
wherein either of the first magnets or the second magnets has a first dimension orthogonal to the support surface which is smaller than a first dimension of the other of the first magnets or the second magnets, either of the first magnets or the second magnets being formed into a recessed shape as viewed from a side of the gap.

2. A magnetic field generator comprising a plurality of magnets on support members disposed opposite to each other across a gap,
wherein the plurality of magnets include:
first magnets having a magnetization direction orthogonal to a support surface of each of the support members; and
second magnets having a magnetization direction parallel to the support surface,
wherein the first magnets and the second magnets form a Halbach magnet array where the first magnets and the second magnets are alternately disposed along the support surface, and
wherein the second magnets have a second dimension parallel to the support surface which is larger than a second dimension of the first magnets.

3. The magnetic field generator according to claim 1 or 2,
wherein the second magnets are formed such that the first dimension orthogonal to the support surface is smaller than the first dimension of the first magnets.

4. The magnetic field generator according to claim 1 or 2,
wherein the first magnets are formed such that the first dimension orthogonal to the support surface is smaller than the first dimension of the second magnets.

5. The magnetic field generator according to claim 2,
wherein a dimensional ratio of the second dimension of the second magnets to the second dimension of the first magnets is 1.5.

6. The magnetic field generator according to any one of claims 1 to 5,
wherein the first magnets and the second magnets are disposed so as to contact the support surface.

7. The magnetic field generator according to any one of claims 1 to 5,
wherein either of the first magnets or the second magnets is disposed so as to contact the support surface, and
wherein the other of the first magnets or the second magnets is disposed so as to be separated from the support surface.

8. The magnetic field generator according to claim 7,
wherein a cooling medium is supplied between the support surface and the other of the first magnets or the second magnets.

9. A magnetic gear, comprising the magnetic field generator according to any one of claims 1 to 8.
